# EUROPEAN PATENT APPLICATION

(11) **EP 3 321 870 A1**
(43) Date of publication of application: **16.05.2018**
(21) Application number: 16198811.8
(22) Date of filing: 15.11.2016
(51) Int. Cl.: G06Q 20/34, G06Q 20/22, G07F 7/10

(54) **PAYMENT CARD FOR MULTIPLE ACCOUNTS**

(71) Applicant: Mastercard International Incorporated, New York, NY 10577 (US)
(72) Inventor: WALL, David, Co. Louth (IE)
(74) Representative: FRKelly

(57) **Abstract**

Provided is a a method of processing a transaction with a payment card comprising an integrated circuit (IC) chip having stored thereon a plurality of personal identification numbers (PIN) associated respectively with a plurality of accounts, the method comprising operating one or more processors associated with the chip to perform the following tasks: receive a PIN number entered at the terminal; determine an account associated with the transaction according to the PIN received; encode a transaction message comprising details of the determined account; and transmit the transaction message to an the electronic transaction terminal for transmission to an appropriate acquirer for authorisation.

## Description

### Field of the Invention

The present disclosure relates to a payment card for multiple accounts. More particularly, it relates to a payment card which includes an integrated circuit (IC) chip having stored thereon a plurality of personal identification numbers (PIN) associated respectively with a plurality of accounts.

### Background of the Disclosure

Payment cards such as credit cards and debit cards are very widely used for all forms of financial transaction. The use of payment cards has evolved significantly with technological developments over recent years. Originally, transactions were on paper, using an imprint of a transaction card and confirmed by a signature. This approach was largely replaced by use of a magnetic stripe of a transaction card swiped through a magnetic stripe reader on a point of sale (POS) terminal to perform a transaction. Transaction cards developed to contain an integrated circuit ("chip cards" or "smart cards") communicate with a smart card reader in the POS terminal. Using this approach, a transaction is typically confirmed by a personal identification number (PIN) entered by the card user. The PIN number entered must correspond to the information stored on the chip. Cards of this type typically operate under the EMV standard for interoperation of chip cards and associated apparatus, such as POS terminals and automated teller machines (ATMs).

As mentioned above, a magnetic stripe may be provided on the back of payment cards. Contemporary credit, debit, identification, pass-key and even cash cards use magnetic strips that maintain encoded information for authenticating and identifying the user of a card. The card holder is able to use the magnetic stripe to complete a transaction. The magnetic stripe is swiped through a magnetic stripe reader on a point of sale (POS) terminal to perform a transaction.

Chips on payment cards may also be configured to provide virtual card capabilities. The chip may be configured to provide a virtual payment number in response to the card holder requesting a virtual payment number at an electronic transaction terminal. The virtual payment number which is generated by the chip is associated with the account of the card holder. As the frequency of e-commerce and transactions conducted via the Internet increases, the use of virtual payment numbers (VPNs) has also increased. Virtual payment numbers generally offer consumers extra flexibility over traditional payment cards by being capable of electronic issuance and distribution. The virtual payment number which is generated by the card may be a controlled payment number (CPN) (also known as a limited use number), allowing for the setting of various limits and controls. The virtual payment number may include additional fraud protection for the card holder, such as by being limited to use for a specific merchant, specific time and/or date, within a specific transaction amount, etc.

Other payment cards include a biometric reader as a fraud prevention mechanism. The biometric reader may be a fingerprint reader. The chip may be configured to communicate with the biometric reader. The card holder may be requested to have their fingerprints read by the fingerprint reader prior to a transaction being completed. If the fingerprint of the card holder which is read by the fingerprint reader does not match a stored fingerprint of the card holder, the chip may terminate the transaction. In contrast, if the fingerprint of the card holder which is read by the fingerprint reader matches a stored fingerprint of the card holder, the chip allows the transaction to be completed.

Payment cards may also be configured to operate contactlessly. The account number associated with the chip can be read automatically from the payment card by an electronic transaction terminal, generally using a short range wireless technology such as Radio Frequency Identification (RFID)-this approach is generally referred to as "contactless" or "proximity" payment. An RFID tag may be embedded into the card member together with a suitable antenna to allow transmission and receipt of wireless signals-the transmissions may be powered by a radio frequency interrogation signal emitted by a proximity reader in the electronic transaction terminal. For an effective connection to be made, the payment card may need to be brought into very close proximity to the proximity reader-this has security benefits and prevents confusion if there are multiple enabled payment cards in the general vicinity of the proximity reader, as will typically be the case in a retail establishment for example. This may be achieved by tapping the antenna of the payment card against the proximity reader of the electronic transaction terminal. Such a contactless payment card can be used to make electronic payment transactions via radio communication with an RFID-enabled payment terminal. The contactless payment card can provide the card holder with a fast convenient way to pay for goods and services.

Several RFID technologies are available for use in contactless payment cards and card readers/terminals. The basic components of a contactless system are the contactless reader (or Proximity Coupling Device (PCD)) and a transponder. The contactless reader is an antenna connected to an electronic circuit. A transponder consists of an inductive antenna and an integrated circuit connected to the ends of this antenna. The combination reader-transponder behaves as a transformer. An alternating current passes through a primary coil (reader antenna) that creates an electromagnetic field, which induces a current in the secondary coil (transponder antenna). The transponder converts the electromagnetic field (or RF field) transmitted by the contactless reader (PCD) into a DC voltage by means of a diode rectifier. This DC voltage powers up the transponder's internal circuits. The configuration and tuning of both antennas determines the coupling efficiency from one device to the other.

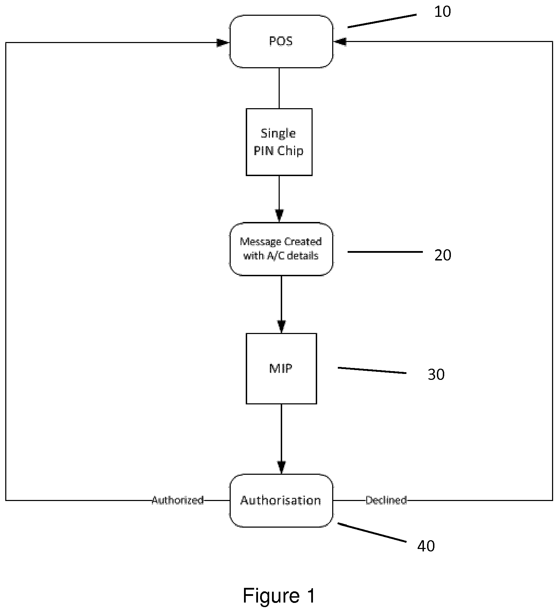

Currently, payment cards generally have one PIN programmed on the chip which is used at a POS to allow the transaction to take place. If the PIN entered is correct, a transaction message is encoded including the account details of the cardholder and sent for processing. Figure 1 is a flowchart illustrating the processing of a transaction using a payment card having a single PIN programmed on its chip. Referring to Figure 1, a single PIN chip payment card is entered into a POS 10, a message is created with the account details 20, an issuer processes the message 30 and determines whether to authorise or decline the transaction 40.

Typically, most people have multiple accounts and therefore require multiple payment cards. It is may inconvenient for a person to carry a large number of payment cards as wallets have limited capacity. Furthermore, a plurality of payment cards held by an individual require the use of more plastics and metal than a single card, with the associated issues related use of energy and resources in their manufacture. This problem becomes more acute as the number of payment cards in circulation increases.

Payment cards that can handle multiple accounts currently exist. UK Patent Application No. GB1501412.9 filed by Mastercard discloses a payment card for multiple accounts. The card comprises a card member; a plurality of programmable chips releasably attached to the card member; each programmable chip having an associated personal identification number (PIN); and a control chip operable for selecting one of the programmable chips to be active during a transacton. This solution requires multiple programmable chips corresponding to respective accounts.

In view of the above-described technologies, there is therefore a need for a payment card which addresses at least some of the drawbacks of the prior art.

### Summary of the Invention

These and other problems are addressed by providing a payment card which includes a single programmable chip associated with a plurality of accounts.

Accordingly, the present disclosure provides a method as detailed in claim 1, a payment card according to claim 10, and an electronic transaciton terminal according to claim 13. Advantageous features are provided in dependent claims.

These and other features will be better understood with reference to the following figures which are provided to assist in an understanding of the present teaching, by way of example only.

### Brief Description of the Drawings

Figure 1 is a flowchart illustrating the processing of a transaction using a payment card having a single PIN programmed on its chip;
Figure 2 is a front view of a payment card according to an embodiment of the present disclosure;
Figure 3 is a rear view of the payment card of Figure 2;
Figure 4 is a flowchart illustrating the processing of transactions using a payment card having two viable PIN numbers programmed on its chip, according to an embodiment of the present disclosure;
Figure 5 is a flowchart illustrating the processing of transactions using a payment card having two viable PIN numbers programmed on its chip; according to another embodiment of the present disclosure; and
Figure 6 is a block diagram illustrating a configuration of an electronic transaction terminal according to an embodiment of the present disclosure.

### Detailed Description

Embodiments of the present disclosure will now be described with reference to some exemplary methods and payment cards. It will be understood that the embodiments described are provided to assist in an understanding of the present disclosure and are not to be construed as limiting in any fashion. Furthermore, modules or elements that are described with reference to any one figure may be interchanged with those of other figures or other equivalent elements without departing from the spirit of the present disclosure.

It will be appreciated that in the following, the term account is intended to include bank accounts, credit accounts, deposit accounts, checking accounts and the like. In a typical transaction using a credit or debit card, a cardholder wishing to complete a transaction (or make a payment) provides a card number together with other card details (such as a card expiry date, card verification code (CVC) number etc.) to a merchant at an electronic transaction terminal. The merchant transmits the card number and the details to an 'acquirer', i.e. a financial institution that facilitates and processes card payments made to the merchant. The acquirer then transmits an authorization request via a payment card network to a card issuer, typically the provider of the card used to make the payment.

A payment card or data associated with a payment account may be provided to a merchant by a cardholder in order to fund a financial transaction, for example the purchase of goods or servies, by the associated payment account. Payment cards may include credit cards, debit cards, charge cards, stored-value cards, prepaid cards, fleet cards, virtual payment numbers, virtual card numbers, controlled payment numbers, etc. A payment card may be a physical card that may be provided to a merchant, or may be data representing the associated payment account.

A payment network is a system or network used for the transfer of money via the use of cash-substitutes. Payment networks may use a variety of different protocols and procedures in order to process the transfer of money for various types of transactions. Transactions that may be performed via a payment network may include product or service purchases, credit purchases, debit transactions, fund transfers, account withdrawals, etc. Payment networks may be configured to perform transactions via cash-substitutes, which may include payment cards, letters of credit, checks, financial accounts, etc. Examples of networks or systems configured to perform as payment networks include those operated by MasterCard®, VISA®, American Express®, etc. The issuer processes the received request and determines whether or not the request is allowable. If the issuer determines that the payment request is allowable, an authorization response is transmitted via the payment card network to the acquirer and transfer of the payment amount to the merchant's account is initiated. Responsive to receiving the authorization response from the issuer, the acquirer communicates the authorization response to the merchant. In this manner, a card number may be used to effect a card payment to a merchant.

In the context of the present disclosure an electronic transaction terminal may include a point of sale (POS), i.e., the location where a retail transaction takes place, or an automated teller machine (ATM) where a cardholder withdraws cash or conducts other transactions.

The present disclosure provides a payment card with a single chip for multiple accounts. When the card is manufactured, the chip may be programmed with a plurality of PIN numbers associated with the card. The cardholder may hold at least a first account and a second account. For example, the cardholder may hold both a credit account and debit account with the same bank. The cardholder may be notified of the PIN numbers that are associated with the credit and debit accounts. When the cardholder uses the payment card at an electronic transaction terminal, they can choose how to use the card. For example, the cardholder may make a purchase using a chip and pin terminal or make a withdrawal from an ATM, and can decide which account to take funds from by choosing which PIN to use.

When a PIN is entered by the cardholder at the electronic transaction terminal, one or more processors associated with the chip may encode a transaction message to be sent to an acquirer. The transaction message may include the transaction total, payment card details, and the PIN that is received. The PIN received may be an encrypted block of data. The one or more processors associated with the chip may determine which account the transaction is to be associated with. The electronic transaction terminal may then submit the transaction message to the appropriate acquirer and receives an approval or denial. The PIN chosen is entered and then enriched in the transaction message created. Logic in the processing of the transaction message determines whether the transaction is related to the debit or credit account. The transaction may be processed at this stage as normal according to which type of account is chosen. The cardholder may be billed accordingly from either their debit account or credit account depending on which PIN they choose.

More particularly, the present disclosure provides a method of processing a transaction with a payment card comprising a single chip programmed with a plurality of personal identification numbers (PIN) each associated with a respective account, the method comprising operating one or more processors associated with the chip to perform the following tasks: receive a PIN number at the terminal; determine an account associated with the transaction according to the PIN received; encode a transaction message comprising details of the determined account; and transmit the transaction message to the electronic transaction terminal for transmission to an appropriate acquirer for authorisation.

The electronic transaction terminal may be a POS terminal or an ATM.

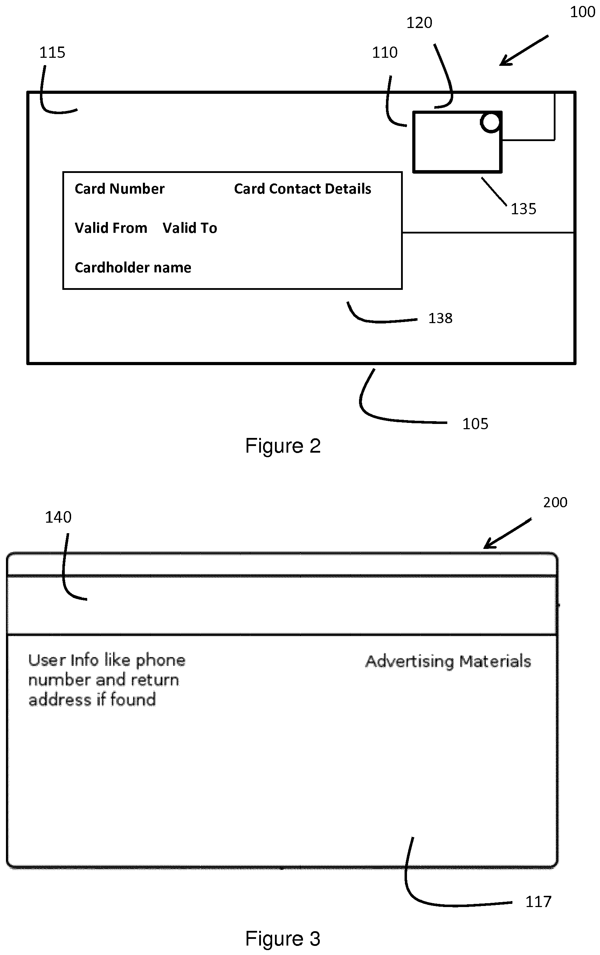

Referring initially to Figures 2 and 3, there is provided a payment card 100 for multiple accounts in accordance with an embodiment of the present disclosure. The payment card 100 comprises a single chip 110 which is attached to a card member 105. The chip 110 comprises one or more microprocessors and may be associated with a plurality of accounts of the card holder. The payment card 100 may be programmed with two or more viable PIN numbers. Each PIN number is associated with a corresponding account, for example, PIN number 1 for a debit account and PIN number 2 for a credit account. The accounts which are associated with the chip 110 may be from the same issuer. Typically, when a bank wants to give a customer the ability to perform a payment, it issues a payment card. Most customers will have more than one card either from the same bank or from multiple banks. In order to cut costs and produce a better user experience the payment card 100 includes a single programmable chip 110 associated with a plurality of accounts of a user. When a transaction occurs at an electronic transaction terminal such as a POS machine or ATM, the PIN entered determines which account to use. The PIN entered may be part of a transaction message and logic in the processing of the transaction decides how to treat the transaction. For example, the transaction may be treated as a credit transaction or debit transaction and be routed as required. The credit transaction may be a dual message transaction, and the debit transaction may be a single message transaction, both described later. As a consequence, the number of payment cards that an individual has to carry may be reduced to a single card.

Referring to Figures 2 and 3, the payment card 100 has a front 115 and a back 117. A socket 120 may be provided on the card member 105 for housing the chip 110. Alternatively, the chip 110 may be embedded into the card member 105. A contact pad 135 may be provided over the chip 110 for electrically coupling the chip 110 to an electronic transaction terminal during a transaction. In this embodiment, the payment card 100 is a contact card. In other embodiments, the payment card may be a contactless card as described below.

The chip 110 may be an EMV smart chip for example. The EMV standard was developed by Europay, MasterCard and Visa, to ensure global interoperability for chip-based payment transactions. When a consumer uses an EMV-enabled device to pay at an EMV terminal, it can be instantly identified as an authentic, approved payment instrument belonging to that consumer through a process called dynamic authentication. When used with a PIN, the chip verifies that the consumer is indeed using their own card. In order to complete a transaction the user enters the PIN number of the selected account on the POS device or ATM.

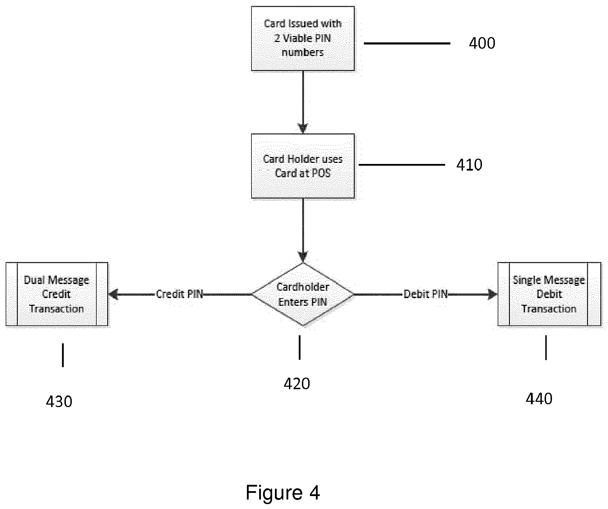

Figure 4 is a flowchart illustrating the processing of transactions using a payment card having two viable PIN numbers programmed on its chip, according to an embodiment of the present disclosure. Referring to Figure 4, a payment card is issued with two viable PIN numbers 400. The PIN numbers are stored on the chip of the payment card. The two PIN numbers may be associated with a credit account and a debit account of the user, respectively. The card holder can then use the card at an electronic transaction terminal such as a POS terminal 410. The card holder enters a PIN at the POS terminal 420. One or more processors on the chip receives the PIN number entered at the terminal, validates the PIN and determines an account associated with the transaction according to the PIN received, encodes a transaction message comprising details of the determined account; and transmits the transaction message to the electronic transaction terminal for transmission to an appropriate acquirer for authorisation. Typically, the transaction message comprises a cryptographically protected message containing, at least, the issuer account associated with the card, the transaction amount and other relevant information. If the PIN number entered is that associated with the credit account, and thus corresponds to the information stored on the chip, a credit transaction may be authorised. If the PIN number entered is that associated with the debit account, and thus corresponds to the information stored on the chip, a debit transaction may be authorised. If the PIN entered does not match any of the PIN numbers stored on the card, the payment transaction may be declined. The transaction may be a single message or a dual message transaction. The choice of processing method may depend on the issuer, the type of card or the region in which the transaction takes place. For example, the debit transaction may be a single-message transaction 440. In a single-message transaction, a single electronic message is created containing all data required for authorization, clearing and settlement of the transaction. The actual financial settlement occurs at a later time. The credit transaction may be a dual-message transaction 430. In a dual-message transaction, the acquirer submits an electronic message at the time of purchase containing the information required for an authorization decision and a second message at a later point in time containing additional data required for clearing and settlement.

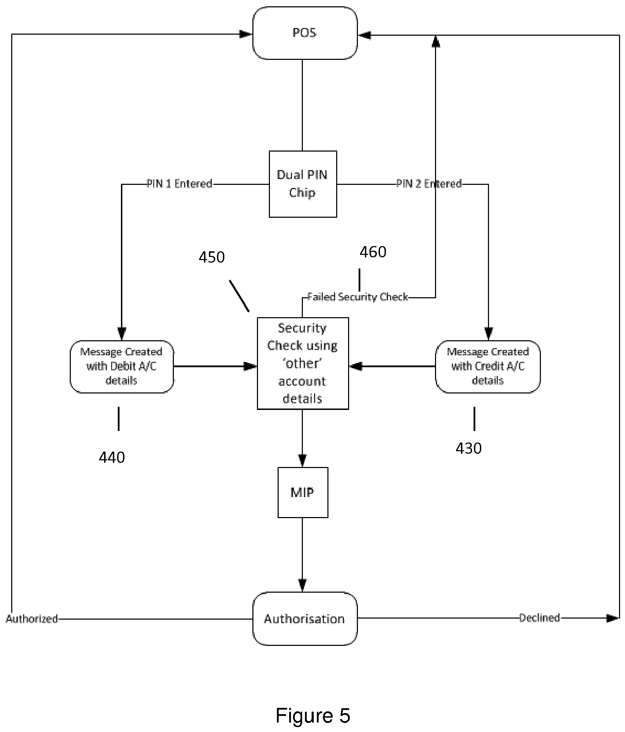

Figure 5 is a flowchart illustrating the processing of transactions using a payment card having two viable PIN numbers programmed on its chip; according to another embodiment of the present disclosure. Referring to Figure 5, the chip of the payment card may be programmed with a secondary functionality in addition to the primary PIN transaction functionality. The secondary functionality may be a security check 450 performed at the electronic transaction terminal so as to confirm that other accounts exist on the chip. If other accounts are determined not to exist on the chip, the transaction may be declined. The idea behind this is that if one account has been compromised and cloned to another card, the card would be useless without the second account present on the chip. More particularly, referring to Figure 5, the method according to the current embodiment may comprise a security check 450. The security check 450 comprises interrogating the chip to determine whether the chip comprises details of further accounts other than an account of the cardholder with which the received PIN number is associated. If it is determined that the chip does not comprise details of further accounts, the transaction may be rejected 460. Referring to Figure 5, the security check may be performed after the credit or debit transaction message 430 or 440 is created comprising details of the account of the cardholder with which the received PIN number is associated.

The details stored on the chip 110 for each account may include for example but not limited to, expiry date, account number, card verification code, and bank specific details. The payment card 100 may include a power source such as a battery or a solar cell.

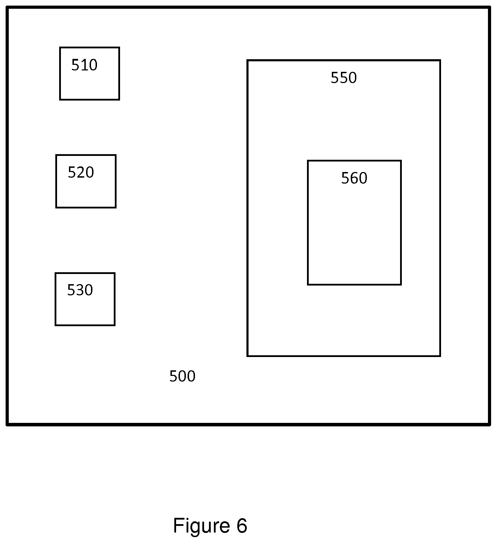

Figure 6 is a block diagram illustrating a configuration of an electronic transaction terminal 500 according to an embodiment of the present disclosure. The electronic transaction terminal 500 comprises one or more processors configured to perform at least some of the above-described methods of the present disclosure. The electronic transaction terminal 500 includes various hardware and software components that allows the electronic transaction terminal 500 to communicate with the chip 110. The electronic transaction terminal 500 comprises a user interface 510, a processor 520 in communication with a memory 550, and a communication interface 530. The processor 520 functions to execute software instructions that can be loaded and stored in the memory 550. The processor 520 may include a number of processors, a multi-processor core, or some other type of processor, depending on the particular implementation. The processor 520 may receive transaction messages from the payment card as described above, and route transaction messages to the cardholder's bank or financial institution. The memory 550 may be accessible by the processor 520, thereby enabling the processor 520 to receive and execute instructions stored on the memory 550. The memory 550 may be, for example, a random access memory (RAM) or any other suitable volatile or nonvolatile computer readable storage medium. In addition, the memory 550 may be fixed or removable and may contain one or more components or devices such as a hard drive, a flash memory, a rewritable optical disk, a rewritable magnetic tape, or some combination of the above.

One or more software modules 560 may be encoded in the memory 550. The software modules 560 may comprise one or more software programs or applications having computer program code or a set of instructions configured to be executed by the processor 520. Such computer program code or instructions may be used to configure the chip 110 with updated software to enhance security, for example. The communciation interface 530 may comprise a magnetic or chip card reader, and/or may be operable to use near field communication to communicate with the chip 110.

The present disclosure is not limited to the embodiment(s) described herein but can be amended or modified without departing from the scope of the present disclosure. Additionally, it will be appreciated that in embodiments of the present disclosure some of the above-described steps may be omitted and/or performed in an order other than that described.

Similarly the words comprises/comprising when used in the specification are used to specify the presence of stated features, integers, steps or components but do not preclude the presence or addition of one or more additional features, integers, steps, components or groups thereof.

## Claims

1. A method of processing a transaction with a payment card comprising an integrated circuit (IC) chip having stored thereon a plurality of personal identification numbers (PIN) associated respectively with a plurality of accounts, the method comprising operating one or more processors associated with the chip to perform the following tasks:
receive a PIN number entered at the terminal;
determine an account associated with the transaction according to the PIN received;
encode a transaction message comprising details of the determined account; and
transmit the transaction message to the electronic transaction terminal for transmission to an appropriate acquirer for authorisation.

2. The method of claim 1, comprising determining if the PIN number received matches one of the plurality of PIN numbers stored on the chip.

3. The method of claim 2, wherein the plurality of PIN numbers stored on the chip are associated with at least a first account of the cardholder and a second account of the cardholder.

4. The method of claim 3, wherein the first account comprises a debit account and the second account comprises a credit account.

5. The method of any of claims 2 to 4, comprising, if the PIN number received matches one of the plurality of PIN numbers stored on the chip, determining that the transaction to be processed relates to an account of the cardholder with which the received PIN number is associated.

6. The method of claim 5, wherein the transaction message comprises details of the account of the cardholder with which the received PIN number is associated.

7. The method of any preceding claim, comprising interrogating the chip to determine whether the chip comprises details of further accounts other than an account of the cardholder with which the received PIN number is associated.

8. The method of claim 7, comprising, if it is determined that the chip does not comprise details of further accounts, rejecting the transaction.

9. The method of any preceding claim, wherein the electronic transaction terminal is a point of sale (POS) terminal or automated teller machine (ATM).

10. A payment card for multiple accounts, the payment card comprising:
an integrated circuit (IC) chip having stored thereon a plurality of personal identification numbers (PIN) associated respectively with a plurality of accounts..

11. The payment card of claim 10, wherein the plurality of PIN numbers stored on the chip are associated with at least a first account of the cardholder and a second account of the cardholder.

12. The payment card of claim 10 or 11, wheren, when the card is manufactured, the chip is programmed with the plurality of PIN numbers.

13. An electronic transaction terminal comprising one or more processors configured to:
receive a transaction message encoded according to the method of any of claims 1 to 9; and
route the encoded transaction message to the appropriate acquirer for authorisation, comprising determining the appropriate acquirer according to the determined account.

14. The electronic transaction terminal according to claim 13, comprising a point of sale (POS) terminal or an automated teller machine (ATM).
